# EUROPEAN PATENT APPLICATION

(11) **EP 4 645 512 A1**
(43) Date of publication of application: **05.11.2025**
(21) Application number: 23911899.5
(22) Date of filing: 20.12.2023
(51) Int. Cl.: H01M 10/0587, H01M 50/107, H01M 50/152, H01M 50/531

(54) **CYLINDRICAL NONAQUEOUS ELECTROLYTE SECONDARY BATTERY**

(30) Priority: 27.12.2022 JP 2022210762
(71) Applicant: Panasonic Intellectual Property Management Co., Ltd., Kadoma-shi, Osaka 571-0057 (JP)
(72) Inventor: KANO, Akira, Kadoma-shi, Osaka 571-0057 (JP); INOUE, Takahiro, Kadoma-shi, Osaka 571-0057 (JP)
(74) Representative: Novagraaf International SA
(86) International application number: PCT/JP2023/045746
(87) International publication number: WO 2024/143119

(57) **Abstract**

A disclosed cylindrical nonaqueous electrolyte secondary battery (100) includes a bottomed cylindrical battery case (20), a spirally-wound type electrode group (10), a nonaqueous electrolyte, a sealing member (40), a positive electrode lead (60), and a negative electrode lead (70). The electrode group (10) includes a positive electrode (11), a negative electrode (12), and a separator (13). The negative electrode (12) is a negative electrode that expands during charging and contracts during discharging. The battery case (20) has an outer diameter of 15 mm or less. The electrode group (10) includes a hollow portion (10s) at a center of the electrode group (10). The negative electrode lead (70) is connected to a portion of the negative electrode (12) that faces the hollow portion (10s). In a discharged state, 0.25 < X/Y ≤ 0.50 is satisfied, where X represents a diameter of the hollow portion and Y represents an inner diameter of the battery case (20).

## Description

### [Technical Field]

The present invention relates to a cylindrical nonaqueous electrolyte secondary battery.

### [Background Art]

Conventionally, various proposals have been made for a nonaqueous electrolyte secondary battery (for example, a lithium secondary battery). PTL 1 (Japanese Laid-Open Patent Publication No. 2000-260473) discloses, in claim 1, "a spirally-wound type lithium secondary battery obtained by spirally winding a positive electrode body that has a lead terminal provided on a current collector to which a positive electrode mixture is applied and a negative electrode body that has a lead terminal provided on a lithium metal or a lithium alloy, with a separator interposed between the positive electrode body and the negative electrode body, wherein at least one of the lead terminal of the positive electrode body and the lead terminal of the negative electrode body is provided on an innermost circumference of a winding core of a wound body, and the lead terminal of the positive electrode body or the lead terminal of the negative electrode body is provided in a region where the positive electrode body and the negative electrode body do not face each other".

PTL 2 (WO 2019/087708) discloses, in claim 2, "a nonaqueous electrolyte secondary battery including: an electrode body including a positive electrode containing a positive electrode active material composed of a lithium-containing transition metal oxide, a negative electrode including a negative electrode current collector on which a lithium metal deposits during charging; a separator provided between the positive electrode and the negative electrode; a nonaqueous electrolyte; and a case that houses the electrode body and the nonaqueous electrolyte, wherein the molar ratio of the total amount of lithium contained in the positive electrode and the negative electrode relative to the amount of transition metal contained in the positive electrode is 1.1 or less, and in a discharged state, 0.4 ≤ Z/Y ≤ 0.8 is satisfied, where Y represents an inner diameter (mm) of the case, and Z represents an inner diameter (mm) of the electrode body".

### [Citation List]

### [Patent Literature]

PTL 1: Japanese Laid-Open Patent Publication No. 2000-260473
PTL 2: WO 2019/087708

### [Summary of Invention]

### [Technical Problem]

A small-diameter nonaqueous electrolyte secondary battery is used in various applications. In the small-diameter nonaqueous electrolyte secondary battery, the expansion and contraction of the negative electrode due to charging and discharging has a significant influence. For this reason, the small-diameter nonaqueous electrolyte secondary battery is required to be designed differently from a large-diameter nonaqueous electrolyte secondary battery. Under the circumstances described above, it is an object of the present disclosure to provide a small-diameter nonaqueous electrolyte secondary battery with favorable battery characteristics.

### [Solution to Problem]

One aspect of the present invention relates to a cylindrical nonaqueous electrolyte secondary battery. The nonaqueous electrolyte secondary battery includes: a bottomed cylindrical battery case; a spirally-wound type electrode group and a nonaqueous electrolyte that are housed in the battery case; a sealing member that seals an opening of the battery case; a positive electrode lead; and a negative electrode lead. The electrode group includes a positive electrode, a negative electrode, and a separator provided between the positive electrode and the negative electrode. The negative electrode is a negative electrode that expands during charging and contracts during discharging. The battery case has an outer diameter of 15 mm or less. The electrode group includes a hollow portion at a center of the electrode group. The negative electrode lead is connected to a portion of the negative electrode that faces the hollow portion. In a discharged state, 0.25 < X/Y ≤ 0.50 is satisfied, where X represents a diameter of the hollow portion and Y represents an inner diameter of the battery case.

### [Advantageous Effects of Invention]

According to the present disclosure, it is possible to obtain a small-diameter nonaqueous electrolyte secondary battery with favorable battery characteristics.

Novel features of the present invention are set forth in the appended claims. However, the present invention will be well understood from the following detailed description of the present invention with reference to the drawings, in terms of both the configuration and the content together with other objects and features of the present invention.

### [Brief Description of Drawings]

[FIG. 1] FIG. 1 is a vertical cross-sectional view schematically showing one example of a nonaqueous electrolyte secondary battery according to Embodiment 1.
[FIG. 2] FIG. 2 is a schematic cross-sectional view illustrating a configuration of an electrode group.
[FIG. 3]FIG. 3 is a top view schematically showing an example of a positive electrode with a positive electrode lead.

### [Description of Embodiment]

Hereinafter, an embodiment of the present disclosure will be described by way of examples. However, the present disclosure is not limited to the examples described below. In the following description, specific numerical values and materials may be listed as examples. However, other numerical values and materials may also be used as long as the advantageous effects of the present disclosure can be obtained. In the specification of the present application, the expression "a range of a numerical value A to a numerical value B" encompasses the range including the numerical value A and the numerical value B, and can also be interpreted as "a numerical value A or more and a numerical value B or less". In the following description, when lower and upper limits of numerical values of specific physical properties, conditions, and the like are shown as examples, the lower limits and the upper limits can be combined in any way as long as the lower limits are not greater than or equal to the upper limits. In the following description, when examples of a constituent element are listed, unless otherwise stated, only one of the listed examples may be used, or two or more of the listed examples may be used in combination.

### (Cylindrical Nonaqueous Electrolyte Secondary Battery)

A cylindrical nonaqueous electrolyte secondary battery according to the present embodiment may also be referred to as "nonaqueous electrolyte secondary battery (B)" or "secondary battery (B)". The secondary battery (B) includes: a bottomed cylindrical battery case; a spirally-wound type electrode group and a nonaqueous electrolyte that are housed in the battery case; a sealing member that seals an opening of the battery case; a positive electrode lead; and a negative electrode lead. The electrode group includes a positive electrode, a negative electrode, and a separator provided between the positive electrode and the negative electrode. The negative electrode is a negative electrode that expands during charging and contracts during discharging. The battery case has an outer diameter of 15 mm or less. The electrode group includes a hollow portion at a center of the electrode group. The negative electrode lead is connected to a portion of the negative electrode that faces the hollow portion. In a discharged state, 0.25 < X/Y ≤ 0.50 is satisfied, where X represents a diameter of the hollow portion and Y represents an inner diameter of the battery case.

There is a demand for a nonaqueous electrolyte secondary battery with improved cycle characteristics and improved thermal stability in the event of a short circuit. The electrode group of a small-diameter battery has a smaller winding core diameter and a smaller number of turns as compared with those of the electrode group of a large-diameter battery. For this reason, the electrode group of a small-diameter battery is susceptible to the influence of the expansion and contraction of the negative electrode due to charging and discharging. As a result of studies, the inventors of the present application found that the characteristics of a small-diameter nonaqueous electrolyte secondary battery can be improved by adopting a specific configuration. The present disclosure has been accomplished based on this new finding. As will be shown in the Example section, the secondary battery (B) has favorable cycle characteristics and favorable thermal stability in the event of a short circuit.

The value of the ratio X/Y may be greater than 0.25, 0.28 or more, or 0.33 or more. The value of the ratio X/Y may be 0.50 or less, less than 0.40, or 0.33 or less. By setting the value of the ratio X/Y to be less than 0.40, it is possible to obtain favorable cycle characteristics and favorable thermal stability while maintaining a high capacity.

The diameter X can be changed by changing the winding core diameter. Specifically, the diameter X can be increased by increasing the winding core diameter. The inner diameter Y can be changed by changing the battery case size.

The diameter X can be calculated based on the following method. First, at a center portion of the secondary battery (B) in a discharged state in a height direction of the secondary battery (B), the secondary battery (B) is cut perpendicular to the central axis of the battery case. Then, an image of the cross section of the electrode group is captured. Next, using the image, a total area S of an area of the hollow portion and an area of a winding core portion, which will be described later, is calculated. The area S corresponds to an area inside of an innermost circumference of the wound body (electrode group). The diameter of a circle that has an area equal to the area S is defined as diameter X. That is, the diameter X corresponds to the equivalent circle diameter of a region inside of the innermost circumference of the wound body. As used herein, the discharged state of the secondary battery (B) when measuring the diameter X means a state in which the secondary battery (B) has a state of charge (SOC) of 10% or less.

The negative electrode may be a negative electrode in which a lithium metal deposits during charging and the lithium metal dissolves during discharging. Hereinafter, a nonaqueous electrolyte secondary battery that includes a negative electrode as described above may be referred to as "lithium secondary battery". In the lithium secondary battery, the negative electrode expands significantly during charging, and it is therefore possible to obtain a particularly large effect from the configuration of the secondary battery (B).

In the lithium secondary battery, for example, 70% or more of the rated capacity is exhibited by deposition and dissolution of the lithium metal. Migration of electrons in the negative electrode during charging and during discharging is mainly caused by deposition and dissolution of the lithium metal in the negative electrode. Specifically, 70 to 100% (for example, 80 to 100% or 90 to 100%) of migration of electrons (electric current from another perspective) in the negative electrode during charging and during discharging is caused by deposition and dissolution of the lithium metal. That is, the negative electrode of the lithium secondary battery is different from a negative electrode in which migration of electrons in the negative electrode during charging and during discharging is mainly caused by absorption and desorption of lithium ions by a negative electrode active material (graphite or the like).

In a battery configured such that a lithium metal deposits on the negative electrode during charging, the open circuit potential (OCP) of the negative electrode in a fully charged state is, for example, 70 mV or less relative to the lithium metal (the dissolution/deposition potential of lithium). As used herein, the term "fully charged state" refers to a state in which a battery is charged to a state of charge (SOC) of, for example, 0.98 × C or more, where the rated capacity of the battery is represented by C. The open circuit potential (OCP) of the negative electrode in a fully charged state can be measured by disassembling the battery in a fully charged state under an argon atmosphere to take out the negative electrode from the battery, and assembling a cell using a lithium metal as a counter electrode. The nonaqueous electrolyte used in the cell may have the same composition as the nonaqueous electrolyte of the disassembled battery.

The negative electrode usually includes a negative electrode current collector. The negative electrode lead may be connected to a portion of the negative electrode current collector that faces the hollow portion.

In a winding start portion of the electrode group at a center of the electrode group, the negative electrode may have a region where the negative electrode does not face the positive electrode. The region may be spirally wound 0.25 turns to 1 turn. With this configuration, it is possible to relieve a stress on an inner circumferential portion of the electrode group caused by expansion of the negative electrode while maintaining a high capacity.

The positive electrode may include a positive electrode current collector and a positive electrode mixture layer provided on the positive electrode current collector. The positive electrode current collector may include an exposed portion in an end portion of the positive electrode current collector on the sealing member side, the exposed portion being where the positive electrode mixture layer is not provided. In this case, the positive electrode lead may be connected to the exposed portion. With this configuration, the positive electrode lead is not provided in a region where the positive electrode mixture layer and the negative electrode mixture layer are stacked, and it is therefore possible to suppress electrode damage caused by expansion of the negative electrode.

It is preferable that the positive electrode lead is not connected to an outermost circumferential portion of the positive electrode. When the positive electrode lead is present in the outermost circumference of the positive electrode, a stress may be generated in a radial direction of the portion to which the positive electrode lead is connected. However, the occurrence of the stress caused by the positive electrode lead can be suppressed by connecting the positive electrode lead to the end portion of the positive electrode current collector on the sealing member side.

The battery case may have an outer diameter D of 3 mm or more, or 4 mm or more. The outer diameter D may be 15 mm or less, 10 mm or less, 6.5 mm or less, or 5.5 mm or less. For example, the outer diameter of the battery case may be within a range of 3 to 6.5 mm (for example, within a range of 3 to 5.5 mm). A battery that has a small outer diameter as described above may be called a pin-type battery. The smaller the battery case, the greater the influence of expansion of the negative electrode. Accordingly, the effect obtained from the configuration of the secondary battery (B) is greater. For this reason, the configuration of the secondary battery (B) is preferably used particularly in a pin-type battery.

The secondary battery (B) may have a height H of 15 mm or more. The height H may be 65 mm or less, or 45 mm or less. The height H may be within a range of 15 to 65 mm (for example, within a range of 15 to 45 mm).

The number of turns of the negative electrode in the spirally-wound type electrode group may be 3 or more, or 5 or more, and 15 or less, or 12 or less. When the number of turns is 12 or less, the effect obtained from the configuration of the secondary battery (B) is particularly great.

The spirally-wound type electrode group can be formed by spirally winding the positive electrode, the negative electrode, and the separator around a predetermined winding core. At this time, the positive electrode, the negative electrode, and the separator are spirally wound, with the separator being interposed between the positive electrode and the negative electrode. As the winding core, for example, two rod-shaped members whose cross sections are semi-circular can be used. After the electrode group has been formed, the winding core is taken out of the electrode group. The remaining portion after the winding core has been taken out is a substantially cylindrical hollow portion. That is, the electrode group includes a hollow portion at a center of the electrode group. The positive electrode, the negative electrode, and the separator each may have a rectangular planar shape or a strip-shaped planar shape.

The electrode group usually includes a winding core portion that is inserted into the winding core during spiral winding. The winding core portion protrudes toward the cylindrical hollow portion. The negative electrode lead may be connected to a portion of the negative electrode current collector that corresponds to the winding core portion. Alternatively, the negative electrode lead may be connected to a portion of the negative electrode that faces the hollow portion. For example, the negative electrode lead may be connected to an innermost circumferential portion of the negative electrode that faces the hollow portion.

Examples of constituent elements of the secondary battery (B) will be described. The constituent elements of the secondary battery (B) are not limited to those described in the examples shown below. As constituent elements other than characteristic constituent elements of the secondary battery (B), those used in a known nonaqueous electrolyte secondary battery may be used.

### (Negative Electrode)

Hereinafter, the negative electrode when the secondary battery (B) is a lithium secondary battery will be described. In this case, the negative electrode includes at least a negative electrode current collector. A lithium metal deposits on the negative electrode surface due to charging. More specifically, due to charging, lithium ions contained in the nonaqueous electrolyte receive electrons on the negative electrode and turn into a lithium metal, and the lithium metal deposits on the surface of the negative electrode. The lithium metal deposited on the surface of the negative electrode dissolves into the nonaqueous electrolyte as lithium ions due to discharging. The lithium ions contained in the nonaqueous electrolyte may be lithium ions derived from a lithium salt added to the nonaqueous electrolyte, lithium ions supplied from the positive electrode active material due to charging, or both of them.

The negative electrode may include a negative electrode current collector and a lithium metal sheet or a lithium alloy in the form of a sheet that adheres closely to a surface of the negative electrode current collector. That is, a lithium metal-containing underlying layer may be formed in advance on the negative electrode current collector. The lithium alloy may contain, other than lithium, an element such as aluminum, magnesium, indium, or zinc. By causing a lithium metal to deposit on the underlying layer during charging, it is possible to suppress the lithium metal depositing in the form of dendrites. There is no particular limitation on the thickness of the underlying layer, and the thickness of the underlying layer may be within a range of 5 µm to 25 µm.

The negative electrode may include a lithium ion absorbing layer (which is a layer that exhibits the capacity due to a negative electrode active material (graphite or the like) absorbing and desorbing lithium ions) supported on the negative electrode current collector. In this case as well, the open circuit potential of the negative electrode in a fully charged state may be 70 mV or less relative to the lithium metal (the dissolution/deposition potential of lithium). When the open circuit potential of the negative electrode in a fully charged state is 70 mV or less relative to the lithium metal, the lithium metal is present on the surface of the lithium ion absorbing layer in the fully charged state.

The lithium ion absorbing layer can be obtained by forming a negative electrode mixture that contains the negative electrode active material into a layer. The negative electrode mixture may contain, in addition to the negative electrode active material, a binder, a thickener, a conductive material, and the like.

Examples of the negative electrode active material include a carbonaceous material, a Si-containing material, a Sn-containing material, and the like. The negative electrode may contain one negative electrode active material, or may contain a combination of two or more negative electrode active materials. Examples of the carbonaceous material include graphite, graphitizable carbon (soft carbon), and non-graphitizable carbon (hard carbon). Examples of the Si-containing material include silicon oxide and a silicate (for example, lithium silicate).

The conductive material is, for example, a carbon material. Examples of the carbon material include carbon blacks (acetylene black, ketjen black, and the like), carbon nanotubes, graphites, and the like.

As the binder, for example, a fluorine resin, polyacrylonitrile, a polyimide resin, an acrylic resin, a polyolefin resin, a rubbery polymer, or the like is used. As the fluorine resin, polytetrafluoroethylene, polyvinylidene fluoride, or the like is used.

The negative electrode current collector may be a conductive sheet. As the conductive sheet, a foil, a film, or the like is used. The material for forming the negative electrode current collector (conductive sheet) may be a conductive material other than a lithium metal and a lithium alloy. The conductive material may be a metal or a metal material such as an alloy. The conductive material is preferably a material unreactive to lithium. More specifically, the conductive material is preferably a material that does not form an alloy nor an intermetallic compound with lithium. Examples of the conductive material include copper (Cu), nickel (Ni), iron (Fe), an alloy that contains any of these metal elements, and a graphite whose basal plane is preferentially exposed. Examples of the alloy include a copper alloy, stainless steel (SUS), and the like. In particular, it is preferable to use copper, which is highly conductive, and/or a copper alloy. There is no particular limitation on the thickness of the negative electrode current collector, and the thickness of the negative electrode current collector may be 5 µm or more and 300 µm or less.

The capacity of the negative electrode of the secondary battery (B) may be mainly exhibited by absorption and desorption of lithium ions, instead of by deposition and dissolution of the lithium metal. That is, the secondary battery (B) may be a battery other than the lithium secondary battery. In this case, the negative electrode includes a negative electrode current collector and a negative electrode mixture layer provided on the negative electrode current collector. As the negative electrode mixture layer, the above-described lithium ion absorbing layer can be used. The negative electrode active material contained in the negative electrode mixture layer preferably contains a Si-containing material. The Si-containing material expands significantly during charging, and it is therefore possible to obtain a large effect from the configuration of the secondary battery (B).

### (Positive Electrode)

The positive electrode includes, for example, a positive electrode current collector and a positive electrode mixture layer supported on the positive electrode current collector. The positive electrode mixture layer contains, for example, a positive electrode active material, a conductive material, and a binder. As the binder and the conductive material, for example, those listed as examples of the binder and the conductive material in the description of the negative electrode can be used. The positive electrode mixture layer may be formed on one or both sides of the positive electrode current collector. The positive electrode can be obtained by applying, for example, to both sides of the positive electrode current collector, a positive electrode mixture slurry containing the positive electrode active material, the conductive material, and the binder, drying the coating film, and then rolling the whole.

The positive electrode active material is a material that absorbs and desorbs lithium ions. As the positive electrode active material, for example, a lithium-containing transition metal oxide, a transition metal fluoride, a polyanion, a fluorinated polyanion, a transition metal sulfide, or the like may be used. In particular, in terms of low production cost and a high average discharge voltage, it is preferable to use a lithium-containing transition metal oxide.

The lithium contained in the lithium-containing transition metal oxide is released from the positive electrode as lithium ions during charging, and deposits on the negative electrode or the negative electrode current collector as a lithium metal. During discharging, the lithium metal dissolves from the negative electrode to release lithium ions, and the lithium ions are absorbed by the composite oxide in the positive electrode. That is, the lithium ions involved in charging/discharging are generally derived from the solute in the nonaqueous electrolyte and the positive electrode active material.

The lithium-containing transition metal oxide preferably has a crystal structure that belongs to the space group R-3m. The crystal structure that belongs to the space group R-3m is a structure in which a lithium-oxygen octahedral layer and a transition metal-oxygen octahedral layer are stacked. For example, lithium nickel oxide (LiNiO₂) and lithium cobalt oxide (LiCoO₂) have the crystal structure that belongs to the space group R-3m. From the viewpoint of obtaining a high capacity, it is preferable that the positive electrode active material has the crystal structure that belongs to the space group R-3m. Whether the positive electrode active material has the crystal structure that belongs to the space group R-3m can be checked using a method such as powder X-ray diffractometry. For example, the crystal structure of the positive electrode active material can be checked by subjecting the positive electrode active material to analysis based on powder X-ray diffractometry and obtaining an X-ray diffraction pattern.

Examples of a transition metal element that can be contained in the lithium-containing transition metal oxide include Sc, Ti, V, Cr, Mn, Fe, Co, Ni, Cu, Y, Zr, W, and the like. The lithium-containing transition metal oxide may contain one transition metal element, or may contain two or more transition metal elements. The transition metal element may be Co, Ni and/or Mn. The lithium-containing transition metal oxide may contain one or more representative elements, where appropriate. Examples of the representative element include Mg, Al, Ca, Zn, Ga, Ge, Sn, Sb, Pb, Bi, and the like. The representative element may be Al or the like.

Out of lithium-containing transition metal oxides, from the viewpoint of obtaining a high capacity, it is preferable to use a composite oxide that contains Ni, Co, and/or Mn as transition metal elements and Al as an optional component, and has a layered rock salt crystal structure. In the lithium secondary battery, a molar ratio (mLi/mM) of a total amount (mLi) of lithium contained in the positive electrode and the negative electrode and an amount (mM) of a metal M contained in the positive electrode other than lithium may be set to, for example, 2.0 or less.

The material for forming the positive electrode current collector (conductive sheet) may be, for example, a metal material that contains Al, Ti, Fe, or the like. The metal material may be Al, an Al alloy, Ti, a Ti alloy, an Fe alloy, or the like. The Fe alloy may be stainless steel (SUS). There is no particular limitation on the thickness of the positive electrode current collector, and the thickness of the positive electrode current collector may be 5 µm or more and 300 µm or less.

### (Negative Electrode Lead)

One end of the negative electrode lead is connected to the negative electrode. The one end of the negative electrode lead may be connected to the negative electrode current collector. The other end of the negative electrode lead is connected directly or indirectly to the battery case (negative electrode terminal). For example, the other end of the negative electrode lead may be connected to the bottom inner surface of the battery case. There is no particular limitation on the method for connecting the negative electrode lead, and a method such as welding may be used.

There is no particular limitation on the negative electrode lead, and a lead used as the negative electrode lead in a known nonaqueous electrolyte secondary battery may be used. Examples of the material for forming the negative electrode lead include copper, nickel, and an alloy of any of these metals. There is no particular limitation on the shape of the negative electrode lead and the positive electrode lead, and they may be in the shape of a wire or a sheet (or a ribbon).

### (Positive Electrode Lead)

One end of the positive electrode lead is connected to the positive electrode. The one end of the positive electrode lead may be connected to the positive electrode current collector. The other end of the positive electrode lead is connected directly or indirectly to the sealing member (positive electrode terminal). There is no particular limitation on the method for connecting the positive electrode lead, and a method such as welding may be used.

There is no particular limitation on the positive electrode lead, and a lead used as the positive electrode lead in a known nonaqueous electrolyte secondary battery may be used. Examples of the material for forming the positive electrode lead include aluminum, titanium, nickel, and an alloy of any of these metals.

### (Separator)

There is no particular limitation on the separator, and a separator used as the separator in a known nonaqueous electrolyte secondary battery may be used. As the separator, an ion-permeable and insulating porous sheet can be used. Examples of the porous sheet include a porous film, a woven fabric, a non-woven fabric, and the like. The porous film may be a uniaxially stretched sheet, a biaxially stretched sheet, or the like. There is no particular limitation on the material for forming the porous sheet, but a polymer material may be used. Examples of the polymer material include a polyolefin resin, a polyamide resin, a polyimide resin, a cellulose, and the like. Examples of the polyolefin resin include polyethylene, polypropylene, a copolymer of ethylene and propylene, and the like. The porous sheet may contain one material, or may contain two or more materials. The porous sheet may contain an additive, where appropriate. As the additive, an inorganic filler or the like may be used.

There is no particular limitation on the thickness of the separator, but the thickness of the separator may be 5 µm or more and 300 µm or less. The thickness of the porous film may be 5 µm or more and 50 µm or less.

The separator may include a heat resistant layer on at least one surface layer of the separator. That is, the separator may include a substrate layer and a heat resistant layer stacked on the substrate layer. The heat resistant layer is formed on at least one main surface selected from two main surfaces of the substrate layer. The heat resistant layer has insulating properties.

The thickness of the heat resistant layer may be 3% to 50% of the thickness of the separator. When the heat resistant layer is formed on each of two main surfaces of the substrate layer, the total thickness may be 3% to 50% of the thickness of the separator.

With the heat resistant layer, it is possible to suppress contraction of the substrate layer when the temperature of the electrode group increases excessively. When the substrate layer contracts, a short circuit is likely to occur between the positive electrode and the negative electrode, which further increases the temperature of the electrode group. With the separator including the heat resistant layer, the contraction of the substrate layer can be suppressed, and thus a further increase in the temperature of the electrode group can be suppressed.

As the substrate layer, the above-described porous sheet, or in other words, the separator used in a nonaqueous electrolyte secondary battery may be used. The substrate layer may be, for example, a porous film that contains a polyolefin resin. It is desirable to use a polyolefin resin because it has excellent durability, and also has a function of closing pores (in short, a shut-down function) when the battery temperature increases to a certain level. The substrate layer may have a single-layer structure, a two-layer structure, or a three or more-layer structure.

The heat resistant layer may contain inorganic particles (or an inorganic filler) and a polymer (or a polymer or a resin). The polymer binds the inorganic particles to the substrate layer. As the polymer, it is desirable to use a heat resistant resin that has a higher level of heat resistance than that of the main component of the substrate layer. The heat resistant layer may contain the inorganic particles as the main component (for example, 80 mass% or more), or may contain the heat resistant resin as the main component (for example, 40 mass% or more). The heat resistant layer may contain the heat resistant resin, without containing inorganic particles.

As the heat resistant resin, a polyamide resin, a polyimide resin, a polyamideimide resin, or the like may be used. In particular, the heat resistant resin preferably contains at least one selected from the group consisting of an aromatic polyamide, an aromatic polyimide, and an aromatic polyamideimide. These are known as polymers that have a particularly high level of heat resistance. From the viewpoint of heat resistance, it is preferable to use an aramid, specifically, a meta-aramid (a meta-wholly aromatic polyamide) or a para-aramid (a para-wholly aromatic polyamide).

The inorganic particles are particles made of an insulating inorganic compound. Examples of the material of the inorganic particles include an oxide, an oxide hydrate, a hydroxide, a nitride, a carbide, a sulfide, and the like. These may contain a metal element.

Specific examples include aluminum oxide, boehmite, magnesium oxide, titanium oxide, zirconium oxide, silicon oxide, yttrium oxide, zinc oxide, silicon nitride, aluminum nitride, boron nitride, titanium nitride, silicon carbide, boron carbide, barium sulfate, aluminum hydroxide, and the like. Out of these, from the viewpoint of insulating properties, heat resistance, and the like, it is preferable to use at least one selected from the group consisting of aluminum oxide, boehmite, talc, titanium oxide, and magnesium oxide.

The inorganic particles may contain a lithium-containing phosphate. The lithium-containing phosphate may be at least one selected from the group consisting of lithium phosphate (Li₃PO₄), dilithium hydrogen phosphate (Li₂HPO₄), and lithium dihydrogen phosphate (LiH₂PO₄). Out of these, it is preferable to use lithium phosphate because it is highly effective in suppressing heat generation in the battery in the event of an abnormality.

There is no particular limitation on the average particle size of the inorganic particles. The inorganic particles may have an average particle size within a range of, for example, 0.2 µm to 2 µm. The lithium-containing phosphate may have an average particle size within a range of 0.1 µm to 1.0 µm or a range of 0.1 µm to 0.5 µm. With an average particle size of 0.1 µm or more, it is possible to ensure pores sufficient for the nonaqueous electrolyte to permeate. With an average particle size of 1.0 µm or less, it is possible to form a heat resistant layer filled with the lithium-containing phosphate at a high density.

In the inorganic particles contained in the heat resistant layer, the proportion of the lithium-containing phosphate is desirably 20 mass% or more, and may be 50 mass% or more. A first layer that contains only the lithium-containing phosphate as the inorganic particles or a first layer that contains the lithium-containing phosphate as the main component (for example, 60 mass% or more of the inorganic particles) and a second layer that contains a component other than that may be stacked. The second layer may contain only inorganic particles other than the inorganic particles that contain the lithium-containing phosphate. The second layer may contain 60 mass% or more of inorganic particles other than the inorganic particles that contain the lithium-containing phosphate, or may contain only the heat resistant resin.

### (Nonaqueous Electrolyte)

The nonaqueous electrolyte may be a lithium ion conductive nonaqueous electrolyte. The nonaqueous electrolyte contains a solvent (a nonaqueous solvent) and an electrolyte salt dissolved in the solvent. The electrolyte salt contains at least a lithium salt. Due to the lithium salt dissolving in the solvent, a lithium ion and an anion are generated. The nonaqueous electrolyte may be in the form of a liquid, or the nonaqueous electrolyte in the form of a liquid may be turned into a gel using a polymer that absorbs the solvent.

Examples of the solvent include an ether compound, an ester compound, a nitrile compound, an amide compound, and a halogenated form thereof. The nonaqueous electrolyte may contain one of these nonaqueous solvents, or two or more of these nonaqueous solvents. The halogenated form may be a fluoride or the like.

The solvent may contain an ether compound as the main component (50 mass% or more). The proportion of the ether compound in the solvent may be 70 mass% or more (for example, 80 mass% or more). The ether compound is unlikely to cause side reactions with the nonaqueous electrolyte and a highly active lithium metal, and thus the consumption of the nonaqueous electrolyte by the side reactions is suppressed. For this reason, even when the negative electrode expands significantly, the nonaqueous electrolyte is unlikely to dry up locally. Accordingly, deterioration of the capacity of the lithium secondary battery due to charge/discharge cycles is suppressed.

Examples of the ester compound include a carbonic ester, a carboxylic ester, and the like. Examples of a cyclic carbonic ester include ethylene carbonate, propylene carbonate, fluoroethylene carbonate (FEC), and the like. Examples of a linear carbonic ester include dimethyl carbonate (DMC), ethyl methyl carbonate (EMC), diethyl carbonate (DEC), and the like. Examples of a cyclic carbonic ester include γ-butyrolactone, γ-valerolactone, and the like. Examples of a linear carbonic ester include ethyl acetate, methyl propionate, methyl fluoropropionate, and the like.

As the ether compound, a cyclic ether or a linear ether may be used. However, it is desirable to use a first ether compound (non-fluorinated ether) represented by the following general formula (1):

R1-(OCH₂CH₂)ₙ-OR2,

where R1 and R2 each independently represent an alkyl group with 1 to 5 carbon atoms, and n is 1 to 3.

The lowest unoccupied molecular orbital (LUMO) of a non-fluorinated ether is present at a high energy level. For this reason, the non-fluorinated ether is unlikely to be reductively decomposed even when the non-fluorinated ether comes into contact with a lithium metal that has a strong reducing power. Furthermore, the oxygen in the non-fluorinated ether backbone strongly interacts with lithium ions, and thus can cause the lithium salt contained in the nonaqueous electrolyte as an electrolyte salt to easily dissolve.

A non-fluorinated ether is suitable for use as the nonaqueous electrolyte solvent in a lithium secondary battery because it suppresses side reactions with the lithium metal and the nonaqueous electrolyte and enhances the solubility of the lithium salt into the solvent.

Specific examples of the first ether compound (non-fluorinated ether) include 1,2-dimethoxyethane, 1,2-diethoxyethane, 1,2-dibutoxyethane, diethylene glycol dimethyl ether, diethylene glycol diethyl ether, diethylene glycol ethyl methyl ether, diethylene glycol dibutyl ether, triethylene glycol dimethyl ether, and the like. These first ether compounds may be used alone or in a combination of two or more.

The ether compound may contain a fluorinated ether. The interaction of the oxygen in the ether backbone of the fluorinated ether with lithium ions is smaller than that of the non-fluorinated ether. The reason is considered to be because, due to the high electronegativity of fluorine atoms, the electrons of the entire molecule are attracted toward the nucleus, which reduces the orbital level of the lone pair of the oxygen in the ether backbone that is supposed to interact with lithium ions.

Out of fluorinated ethers, it is desirable to use a second ether compound represented by the following general formula (2):

Cₐ₁H_{b1}F_{c1}O_{d1}(CF₂OCH₂)Cₐ₂H_{b2}F_{c2}O_{d2},

where a1 ≥ 1, a2 ≥ 0, b1 ≤ 2a1, b2 ≤ 2a2, c1 = (2a1+1)-b1, c2 = (2a2+1)-b2, d1 ≥ 0, and d2 ≥ 0.

As the ether compound, a fluorinated ether and a non-fluorinated ether may be used in combination. For example, when the first ether compound and the second ether compound are used together, in the lithium secondary battery, charge/discharge reactions proceed more uniformly. The reason is considered to be because the solvation energy is well balanced between the ether compound and lithium ions.

The fluorination rate of the second ether compound may be 60% or more. As used herein, the term "the fluorination rate of the second ether compound" refers to the ratio of the number of fluorine atoms relative to the total number of fluorine atoms and hydrogen atoms contained in the second ether compound, expressed in percentage (%).

Specific examples of the second ether compound (fluorinated ether) include 1,1,2,2-tetrafluoroethyl 2,2,2-trifluoroethyl ether, 1,1,2,2-tetrafluoroethyl 2,2,3,3-tetrafluoropropyl ether, and the like. These second ether compounds may be used alone or in a combination of two or more.

The proportion of the total amount of the first ether compound and the second ether compound in the entire solvent may be 80 volume% or more. When the proportion of the total amount of the first ether compound and the second ether compound in the entire solvent is 80 volume% or more, the effect of improving the cycle characteristics of the lithium secondary battery becomes more prominent.

Volume ratio V1/V2 of volumeV1 of the first ether compound to volumeV2 of the second ether compound is preferably 1/0.5 to 1/4, and more preferably 1/0.5 to 1/2.

As the anion of the lithium salt, a known anion used in the nonaqueous electrolyte of a nonaqueous electrolyte secondary battery can be used. Specific examples include BF₄⁻, ClO₄⁻, PF₆⁻, CF₃SO₃⁻, CF₃CO₂⁻, an imide anion, an oxalate complex anion, and the like.

From the viewpoint of suppressing a lithium metal depositing in the form of dendrites, the electrolyte salt may contain at least one selected from the group consisting of an imide anion, PF₆⁻, and an oxalate complex anion. Out of these, the oxalate complex anion tends to cause a lithium metal to deposit uniformly in the form of fine particles due to the interaction with lithium.

Examples of the imide anion include N(SO₂F)₂⁻, N(SO₂CF₃)₂⁻, N(CₘF₂ₘ₊₁SO₂)ₓ(CₙF₂ₙ₊₁SO₂)_{y}⁻, and the like, where m and n each independently represent an integer of 0, or 1 or more, and x and y each independently represent 0, 1, or 2, and satisfy x + y = 2. Out of these, it is preferable to use bis(fluorosulfonyl)imide anion (N(SO₂F)₂⁻). Accordingly, it is desirable that the lithium salt contains lithium bis(fluorosulfonyl)imide (hereinafter also referred to as "LiFSI").

Examples of the oxalate complex anion include bis(oxalate)borate anion, difluoro(oxalate)borate anion (BF₂(C₂O₄)⁻), PF₄(C₂O₄)⁻, PF₂(C₂O₄)₂⁻, and the like. Out of these, it is preferable to use difluoro(oxalate)borate anion (BF₂(C₂O₄)⁻). Accordingly, it is desirable that the lithium salt contains lithium difluoro(oxalate)borate (hereinafter also referred to as "LiFOB").

It is desirable that the electrolyte salt contains at least one selected from the group consisting of LiPF₆, an imide salt, and an oxalate complex salt. The lithium salt concentration in the nonaqueous electrolyte is, for example, 0.5 mol/L or more and 3.5 mol/L or less. The oxalate complex salt concentration in the nonaqueous electrolyte may be 0.05 mol/L or more and 1 mol/L or less.

### (Outer Casing)

The outer casing houses the electrode group and the nonaqueous electrolyte. There is no particular limitation on the outer casing, and an outer casing used in a known nonaqueous electrolyte secondary battery may be used. The outer casing may include a bottomed cylindrical battery case, a sealing member, and a gasket.

Hereinafter, one example of the nonaqueous electrolyte secondary battery (B) will be described specifically with reference to the drawings. The above-described constituent elements can be used as the constituent element of the one example of the nonaqueous electrolyte secondary battery described below. Also, the constituent elements of the one example of the nonaqueous electrolyte secondary battery described below can be changed based on the foregoing description. Also, the matters described below can also be applied to the embodiment described above. Also, in the nonaqueous electrolyte secondary battery described below, the constituent elements that are not essential to the nonaqueous electrolyte secondary battery of the present disclosure may be omitted.

### (Embodiment 1)

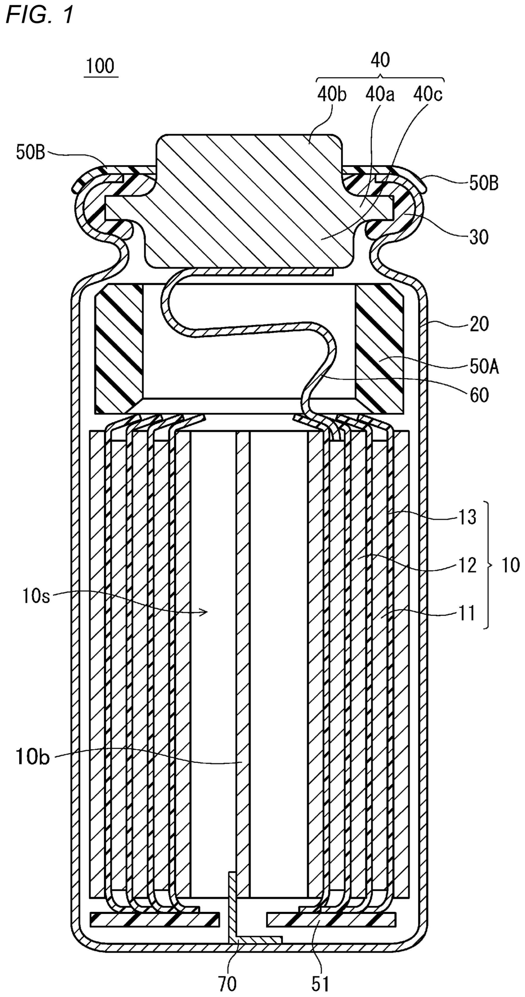

In Embodiment 1, as one example of the secondary battery (B), an example of a pin-type lithium secondary battery will be described. FIG. 1 schematically shows a vertical cross-sectional view of a nonaqueous electrolyte secondary battery (lithium secondary battery) 100 according to Embodiment 1. The cylindrical nonaqueous electrolyte secondary battery 100 includes: a bottomed cylindrical battery case 20 that has an opening; a spirally-wound type electrode group 10 and a nonaqueous electrolyte (not shown) that are housed in the battery case 20; a sealing member 40 that seals the opening of the battery case 20; and an insulating plate 51. The electrode group 10 is constituted of a positive electrode 11, a negative electrode 12, and a separator 13 provided between the positive electrode 11 and the negative electrode 12. There is a substantially cylindrical space (a hollow portion 10s) at a center of the electrode group 10.

The sealing member 40 is in the shape of a hat, and includes a ring-shaped flange (a brim 40a), and cylindrical terminal portions 40b and 40c that protrude in the thickness direction from an inner circumference of the brim 40a. A ring-shaped insulating gasket 30 is provided along a peripheral portion of the sealing member 40 so as to cover the brim 40a. An opening end of the battery case 20 is bent inward to enclose the gasket 30 and the peripheral portion of the sealing member 40. By doing so, the battery case 20 and the sealing member 40 are insulated from each other, and the battery case 20 is sealed.

A space is formed between an upper end surface (top surface) of the electrode group 10 and a bottom surface of the sealing member 40. A first insulating ring 50A is provided in this space. The first insulating ring 50A prevents contact between the electrode group 10 and the sealing member 40. A doughnut-shaped second insulating ring 50B is provided to cover an outer surface of the opening end of the battery case 20 and a surface of the gasket 30 in the vicinity thereof.

One end of a positive electrode lead 60 is connected to the positive electrode 11. The other end of the positive electrode lead 60 is connected to a bottom surface of the sealing member 40 through a hole formed at a center of the first insulating ring 50A. That is, the positive electrode 11 and the sealing member 40 are electrically connected via the positive electrode lead 60. The sealing member 40 functions as a positive electrode terminal.

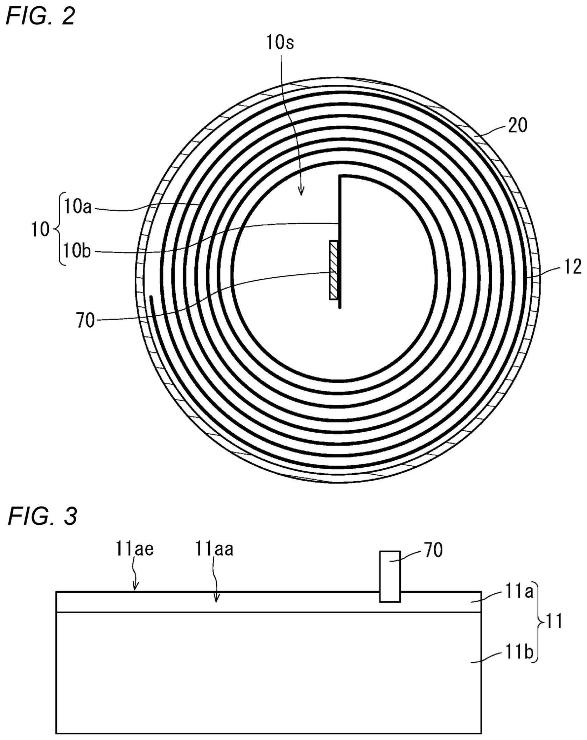

A schematic cross-sectional view of the electrode group 10 perpendicular to the axis of the electrode group 10 is shown in FIG. 2. In FIG. 2, out of the constituent elements of the electrode group 10, only the negative electrode 12 is shown as a representative example. In practice, as shown in FIG. 1, the positive electrode 11 and the separator 13 are spirally wound together with the negative electrode 12. As described above, in the winding start portion of the electrode group 10 at the center of the electrode group 10, the negative electrode 12 may include a region where the negative electrode 12 does not face the positive electrode 11. The region may be spirally wound 0.25 turns to 1 turn. As shown in FIG. 2, at the center of the electrode group 10, there is a substantially cylindrical hollow portion 10s. One example of the electrode group 10 shown in FIG. 2 includes a spirally wound portion 10a and a winding core portion 10b. The spirally wound portion 10a is a portion where the positive electrode 11, the negative electrode 12, and the separator 13 are spirally wound and stacked. The winding core portion 10b is a portion that is inserted into the winding core during spiral winding of the positive electrode 11, the negative electrode 12, and the separator 13. The winding core portion 10b may be constituted only of the negative electrode 12 (for example, the negative electrode current collector), or may be constituted of the negative electrode 12 (for example, the negative electrode current collector) and the separator 13. Alternatively, the winding core portion 10b may be constituted of the positive electrode 11 (for example, the positive electrode current collector), the negative electrode 12 (for example, the negative electrode current collector), and the separator 13.

The winding core portion 10b of the electrode group 10 protrudes in the hollow portion 10s. In one example shown in Embodiment 1, one end of the negative electrode lead 70 is connected to the negative electrode 12 (more specifically, the negative electrode current collector) that constitutes the winding core portion 10b. The other end of the negative electrode lead 70 is connected to the battery case 20. The battery case 20 functions as a negative electrode terminal. The connection of the positive electrode lead 60 to another member and the connection of the negative electrode lead 70 to another member are performed by welding or the like.

FIG. 3 shows the positive electrode 11 in an exposed state. The positive electrode 11 includes a positive electrode current collector 11a and a positive electrode mixture layer 11b formed on both sides of the positive electrode current collector 11a. The positive electrode current collector 11a includes an exposed portion 11aa along an end portion 11ae that is an end portion of the positive electrode current collector 11a on the sealing member 40 side, the exposed portion 11aa being where the positive electrode mixture layer is not provided. The positive electrode lead 60 is connected to the exposed portion 11aa.

### (Additional Statement)

The following techniques are disclosed based on the forgoing description.

### (Technique 1)

A cylindrical nonaqueous electrolyte secondary battery including:
a bottomed cylindrical battery case;
a spirally-wound type electrode group and a nonaqueous electrolyte that are housed in the battery case;
a sealing member that seals an opening of the battery case;
a positive electrode lead; and
a negative electrode lead,
wherein the electrode group includes a positive electrode, a negative electrode, and a separator provided between the positive electrode and the negative electrode,
the negative electrode is a negative electrode that expands during charging and contracts during discharging,
the battery case has an outer diameter of 15 mm or less,
the electrode group includes a hollow portion at a center of the electrode group,
the negative electrode lead is connected to a portion of the negative electrode that faces the hollow portion, and
in a discharged state, 0.25 < X/Y ≤ 0.50 is satisfied, where X represents a diameter of the hollow portion and Y represents an inner diameter of the battery case.

### (Technique 2)

The nonaqueous electrolyte secondary battery in accordance with technique 1,
wherein the negative electrode is a negative electrode in which a lithium metal deposits during charging and the lithium metal dissolves during discharging.

### (Technique 3)

The nonaqueous electrolyte secondary battery in accordance with technique 1 or 2,
wherein the negative electrode includes a negative electrode current collector, and
the negative electrode lead is connected to a portion of the negative electrode current collector that faces the hollow portion.

### (Technique 4)

The nonaqueous electrolyte secondary battery in accordance with any one of techniques 1 to 3,
wherein, in a winding start portion of the electrode group at a center of the electrode group, the negative electrode includes a region where the negative electrode does not face the positive electrode, and
the region is spirally wound 0.25 turns to 1 turn.

### (Technique 5)

The nonaqueous electrolyte secondary battery in accordance with any one of techniques 1 to 4,
wherein the positive electrode includes a positive electrode current collector and a positive electrode mixture layer provided on the positive electrode current collector,
the positive electrode current collector includes an exposed portion along an end portion of the positive electrode current collector on the sealing member side, the exposed portion being where the positive electrode mixture layer is not provided, and
the positive electrode lead is connected to the exposed portion.

### (Technique 6)

The nonaqueous electrolyte secondary battery in accordance with any one of techniques 1 to 5,
wherein the outer diameter of the battery case is within a range of 3 to 6.5 mm.

### (Technique 7)

The nonaqueous electrolyte secondary battery in accordance with any one of techniques 1 to 6,
wherein the separator includes a substrate layer and a heat resistant layer stacked on the substrate layer.

### (Technique 8)

The nonaqueous electrolyte secondary battery in accordance with technique 7,
wherein the heat resistant layer contains inorganic particles and a polymer.

### (Technique 9)

The nonaqueous electrolyte secondary battery in accordance with technique 8,
wherein the inorganic particles contain a lithium-containing phosphate.

### (Technique 10)

The nonaqueous electrolyte secondary battery in accordance with technique 9,
wherein the lithium-containing phosphate is lithium phosphate.

### Example

Hereinafter, the nonaqueous electrolyte secondary battery (B) will be described in detail based on examples. In this Example section, a plurality of lithium secondary batteries with different X/Y values and the like were produced and evaluated.

### (Battery A1)

A lithium secondary battery with the same structure as that of the cylindrical nonaqueous electrolyte secondary battery 100 shown in FIG. 1 was produced in the following procedure. The lithium secondary battery was configured to have an outer diameter D of 4 mm and a height H of 25 mm.

### (1) Production of Positive Electrode 11

A positive electrode slurry was prepared by mixing 100 parts by mass of a positive electrode active material, 4 parts by mass of acetylene black (as a conductive material), 4 parts by mass of polyvinylidene fluoride (as a binder), and N-methyl-2-pyrrolidone (as a dispersion medium). As the positive electrode active material, a lithium-containing transition metal oxide containing Li, Ni, Co, and Al was used. Next, the positive electrode slurry was applied to both sides of an aluminum foil (as a positive electrode current collector, thickness: 15 µm), and then dried to obtain a stacked body. At this time, the positive electrode slurry was applied so as to form an exposed portion 11aa as shown in FIG. 3. Next, the stacked body was compressed in the thickness direction. In this way, a positive electrode 11 (thickness: 80 µm) including a positive electrode current collector and positive electrode mixture layers respectively formed on both sides of the positive electrode current collector was produced.

Next, one end of a positive electrode lead 60 (width: 1.0 mm, thickness: 0.05 mm) made of aluminum was connected to the exposed portion of the positive electrode current collector.

### (2) Production of Negative Electrode 12

A negative electrode 12 (thickness: 50 µm) was produced by respectively attaching lithium metal foils (thickness: 20 µm) to both sides of a copper foil (as a negative electrode current collector, thickness: 10 µm). At this time, in a portion of the negative electrode 12 corresponding to the above-described winding core portion 10b, the negative electrode current collector was exposed to form an exposed portion of the negative electrode current collector. One end of a negative electrode lead 70 (width: 1.5 mm, thickness: 0.05 mm) made of nickel was connected to the exposed portion.

### (3) Production of Electrode Group 10

A spirally-wound type electrode group 10 was formed by spirally winding the positive electrode 11 and the negative electrode 12 with a separator 13 interposed therebetween. As the separator 13, a porous film (thickness: 16 µm) made of polyethylene was used. The hollow portion diameter X of the obtained electrode group 10 was measured based on the above-described method.

### (4) Preparation of Nonaqueous Electrolyte

A nonaqueous electrolyte was prepared by dissolving LiFSI and LiFOB in a solvent. As the solvent, a mixed solvent of dimethoxyethane (DME) and 1,1,2,2-tetrafluoroethyl 2,2,3,3-tetrafluoropropyl ether (H(CF₂)₂CH₂O(CF₂)₂H) mixed at a mass ratio of 50:50 was used. At this time, the LiFSI concentration in the nonaqueous electrolyte was set to 1.5 mol/L, and the LiFOB concentration in the nonaqueous electrolyte was set to 0.1 mol/L.

### (5) Production of Lithium Secondary Battery

The electrode group 10 obtained in the section (3) above was inserted into a battery case 20 (outer diameter D: 4.5 mm, inner diameter Y: 4 mm). At this time, the other end of the negative electrode lead 70 was welded to a bottom surface of the battery case 20. Furthermore, the other end of the positive electrode lead 60 was connected, through a hole of a first insulating ring 50A, to a bottom surface of a sealing member 40 to which a gasket 30 had been attached. As the sealing member 40, a sealing member made of an iron plated with nickel was used.

Next, the nonaqueous electrolyte prepared in the section (4) above was injected into the battery case 20. Next, the sealing member 40 was placed on an opening of the battery case 20, and the opening end of the battery case 20 was bent inward to seal the opening. Next, a second insulating ring 50B was formed by applying a butyl rubber-based insulating coating material in the shape of a doughnut so as to cover an outer surface of the opening end of the battery case 20 and a surface of the gasket 30. In this way, a lithium secondary battery (battery A1) with a rated capacity of 45 mAh was obtained.

### (Other Batteries)

Batteries A2 to A4 and batteries C1 to C3 were produced in the same manner and under the same condition as those used to produce the battery A1, except that the production conditions of some batteries were changed as shown in Table 1. In the batteries C2 and C3, an exposed portion of the negative electrode current collector was formed on the outermost circumference of the negative electrode 12, and one end of the negative electrode lead 70 was connected to the exposed portion. The other end of the negative electrode lead 70 was connected to the bottom surface of the battery case 20.

When forming the electrode group 10 of each battery, the value of the hollow portion diameter X was changed by changing the winding core. As a result of the diameter X being measured based on the above-described method, the values of the ratio X/Y as shown in Table 1 were obtained.

In the battery A4, the separator was changed. Specifically, the battery A4 was produced using a separator including a substrate layer and a heat resistant layer stacked on one side of the substrate layer. As the substrate layer, the same separator as that used in the battery A1 was used. As the heat resistant layer, a layer (thickness: 2 µm) containing aluminum oxide (Al₂O₃) particles, lithium phosphate (Li₃PO₄) particles, and an aromatic polyamide at a mass ratio of 48:48:2 was used. In the batteries other than the battery A4, the same separator as that used in the battery A1 was used.

### (Evaluation of Battery)

Each of the produced batteries were subjected to capacity retention rate (100 cycles) evaluation and a nail penetration test in the following procedure.

### (1) Capacity Retention Rate

First, each battery was charged at a constant current of 0.1 It until the closed circuit voltage of the battery reached 4.2 V, and thereafter the battery was subjected to constant voltage charging at 4.2 V until the current value reached 0.05 It. As used herein, the unit "It (A)" refers to a current value represented by rated capacity (Ah) /1 (h). After that, a time interval of 20 minutes was taken, and the battery was discharged at a constant current of 0.1 It until the closed circuit voltage of the battery reached 2.5 V. This charge/discharge cycle was repeated 100 times (100 cycles). The proportion (%) of discharge capacity at the 100th cycle relative to discharge capacity at the first cycle was determined as capacity retention rate.

### (2) Nail Penetration Test

First, each battery was subjected to 100 charge/discharge cycles in the manner described above. Next, in an environment of 25°C, the battery was charged at a constant current of 0.3 It until the battery voltage reached 4.2 V, and then the battery was subjected to constant voltage charging until the current value reached 0.05 It. A round nail (diameter: 0.9 mm) was penetrated into the battery charged in the manner described above at a center portion of the battery at a speed of 1 mm/sec in an environment of 25°C. Then, the penetration of the round nail was stopped immediately after a battery voltage drop (Δ50 mV) caused by an internal short circuit was detected. After one minute after the battery was short-circuited, the surface temperature of the battery was measured.

Some production conditions and evaluation results are shown in Table 1. The batteries A1 to A4 correspond to examples of the nonaqueous electrolyte secondary battery (B) according to the present disclosure. The batteries C1 to C3 correspond to comparative examples.

**[Table 1]**

| Battery | Connection position of negative electrode lead | X/Y | Separator | Capacity retention rate after 100 cycles (%) | Highest temperature during nail penetration test |
|---|---|---|---|---|---|
| A1 | Winding core portion | 0.50 | Without heat resistant layer | 96 | < 120°C |
| A2 | Winding core portion | 0.33 | Without heat resistant layer | 96 | < 120°C |
| A3 | Winding core portion | 0.28 | Without heat resistant layer | 94 | < 120°C |
| A4 | Winding core portion | 0.33 | Heat resistant layer provided | 94 | < 60°C |
| C1 | Outermost circumference | 0.25 | Without heat resistant layer | 92 | 120°C < |
| C2 | Outermost circumference | 0.50 | Without heat resistant layer | 90 | 120°C < |
| C3 | Winding core portion | 0.25 | Without heat resistant layer | 83 | 120°C < |

The electrode group of each battery after 100 charge/discharge cycles was observed. In the batteries C1 and C2, electrode bending was prominently observed in the inner circumferential portion of the electrode group. On the other hand, in the battery A1, such electrode bending was not observed. The reason is considered to be because, when the negative electrode lead is present in the outermost circumference of the wound body, a stress caused by expansion of the negative electrode occurs remarkably in the radial direction of the portion to which the negative electrode lead is connected.

As shown in Table 1, the batteries A1 to A4 corresponding to examples of the secondary battery (B) exhibited a higher capacity retention rate than that of the batteries C1 and C2 corresponding to comparative examples. The reason is considered to be because, in the batteries C1 and C2, electrode bending occurred and lithium metal deposition was nonuniform.

In the batteries A1 to A4, the highest temperature during nail penetration test was less than 120°C. On the other hand, in the batteries C1 and C2, the highest temperature during nail penetration test was greater than 120°C. That is, the batteries A1 to A4 have a higher level of thermal stability in the event of a short circuit than that of the batteries C1 and C2. The reason is considered to be because, in the batteries C1 and C2, lithium metal deposition was uniform, causing non-uniform heat generation in the event of a short circuit.

As is clear from the comparison between the battery A3 and the battery C3, even when the negative electrode lead is connected to the winding core portion, if the value of the ratio X/Y is not within an appropriate range, favorable results cannot be obtained. The reason is considered to be because, if the value of the ratio X/Y is not within an appropriate range, a stress caused by expansion of the negative electrode cannot be relieved sufficiently.

### [Industrial Applicability]

The present disclosure is applicable to a cylindrical nonaqueous electrolyte secondary battery (in particular, a pin-type secondary battery).

The present invention has been described in terms of the presently preferred embodiments, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

### [Reference Signs List]

10: electrode group
10s: hollow portion
11: positive electrode
11a: positive electrode current collector
11aa: exposed portion
11b: positive electrode mixture layer
12: negative electrode
13: separator
20: battery case
40: sealing member
60: positive electrode lead
70: negative electrode lead
100: nonaqueous electrolyte secondary battery

## Claims

1. A cylindrical nonaqueous electrolyte secondary battery comprising:
a bottomed cylindrical battery case;
a spirally-wound type electrode group and a nonaqueous electrolyte that are housed in the battery case;
a sealing member that seals an opening of the battery case;
a positive electrode lead; and
a negative electrode lead,
wherein the electrode group includes a positive electrode, a negative electrode, and a separator provided between the positive electrode and the negative electrode,
the negative electrode is a negative electrode that expands during charging and contracts during discharging,
the battery case has an outer diameter of 15 mm or less,
the electrode group includes a hollow portion at a center of the electrode group,
the negative electrode lead is connected to a portion of the negative electrode that faces the hollow portion, and
in a discharged state, 0.25 < X/Y ≤ 0.50 is satisfied, where X represents a diameter of the hollow portion and Y represents an inner diameter of the battery case.

2. The nonaqueous electrolyte secondary battery according to claim 1,
wherein the negative electrode is a negative electrode in which a lithium metal deposits during charging and the lithium metal dissolves during discharging.

3. The nonaqueous electrolyte secondary battery according to claim 1 or 2,
wherein the negative electrode includes a negative electrode current collector, and
the negative electrode lead is connected to a portion of the negative electrode current collector that faces the hollow portion.

4. The nonaqueous electrolyte secondary battery according to claim 1 or 2,
wherein, in a winding start portion of the electrode group at a center of the electrode group, the negative electrode includes a region where the negative electrode does not face the positive electrode, and
the region is spirally wound 0.25 turns to 1 turn.

5. The nonaqueous electrolyte secondary battery according to claim 1 or 2,
wherein the positive electrode includes a positive electrode current collector and a positive electrode mixture layer provided on the positive electrode current collector,
the positive electrode current collector includes an exposed portion along an end portion of the positive electrode current collector on the sealing member side, the exposed portion being where the positive electrode mixture layer is not provided, and
the positive electrode lead is connected to the exposed portion.

6. The nonaqueous electrolyte secondary battery according to claim 1 or 2,
wherein the outer diameter of the battery case is within a range of 3 to 6.5 mm.

7. The nonaqueous electrolyte secondary battery according to claim 1 or 2,
wherein the separator includes a substrate layer and a heat resistant layer stacked on the substrate layer.

8. The nonaqueous electrolyte secondary battery according to claim 7,
wherein the heat resistant layer contains inorganic particles and a polymer.

9. The nonaqueous electrolyte secondary battery according to claim 8,
wherein the inorganic particles contain a lithium-containing phosphate.

10. The nonaqueous electrolyte secondary battery according to claim 9,
wherein the lithium-containing phosphate is lithium phosphate.
